# EUROPÄISCHE PATENTSCHRIFT

(11) **EP 2 934 242 B1**
(45) Veröffentlichungstag und Bekanntmachung des Hinweises auf die Patenterteilung: **21.11.2018**
(21) Anmeldenummer: 13821100.8
(22) Anmeldetag: 20.12.2013
(51) Int. Cl.: A47J 27/62, F24C 7/08

(54) **VERFAHREN ZUM ÜBERWACHEN EINES GARGERÄTS UND GARGERÄT MIT TEMPERATURFÜHLER**
METHOD FOR MONITORING A COOKING DEVICE, AND COOKING DEVICE WITH TEMPERATURE SENSOR
PROCÉDÉ DE SURVEILLANCE D'UN APPAREIL DE CUISSON ET APPAREIL DE CUISSON POURVU D'UN CAPTEUR DE TEMPÉRATURE

(30) Priorität: 21.12.2012 DE 102012112858
(43) Veröffentlichungstag der Anmeldung: 28.10.2015
(73) Patentinhaber: RATIONAL Aktiengesellschaft, 86899 Landsberg am Lech (DE)
(72) Erfinder: FINK, Michael, 82234 Wessling (DE); FUNK, Gerd, 64404 Bickenbach (DE)
(74) Vertreter: Prinz & Partner mbB
(86) Internationale Anmeldenummer: PCT/EP2013/077650
(87) Internationale Veröffentlichungsnummer: WO 2014/096342

(56) Entgegenhaltungen:
- EP-B1- 0 687 866
- WO-A2-2013/098628
- DE-A1-102009 003 105
- DE-A1-102011 109 163
- US-B1- 7 026 929
- US-B2- 7 201 099

## Beschreibung

Die Erfindung betrifft ein Verfahren zum Überwachen eines mit einer Steuereinheit eines Gargeräts über eine Funkverbindung verbundenen Temperaturfühlers sowie ein Gargerät mit einer Steuereinheit und wenigstens einem mit der Steuereinheit in Funkverbindung stehenden Temperaturfühler.

In der DE 10 2009 003 105 A1 ist beschrieben, ein Gargefäß mit einem RFID-Transponder zu versehen, der einen Temperaturfühler aufweist und der bei einer Abfrage den aktuellen Temperaturwert des Gargefäßes an ein Lesegerät in einem Herd zurücksendet.

Bei kabellosen Temperaturfühlern besteht naturgemäß die Gefahr, dass sie verloren gehen. Dies gilt insbesondere in der unübersichtlichen Umgebung einer Großküche.

Die gattungsgemäße US 7,026,929 B1 schlägt vor, die Anwesenheit der Temperaturfühler an deren zugeordnetem Ort zu überprüfen, indem Ortsinformationen aus einem lokalen Netzwerk ausgewertet werden und bei Abweichungen ein akustisches und/oder optisches Indikatorsignal am Temperaturfühler und/oder einer Benutzeroberfläche eines Steuergeräts auszugeben.

Die nachveröffentlichte WO 2013/098628 A2 diskutiert, einen Alarm auszugegeben, wenn kein Antwortsignal des Temperaturfühlers mehr erfasst wird.

Es ist Aufgabe der Erfindung, einen einfachen Weg zu schaffen, um zu verhindern, dass ein Temperaturfühler verloren geht bzw. um einen verlegten Temperaturfühler leicht wieder aufzufinden.

Erreicht wird dies bei einem Verfahren zum Überwachen eines mit einer Steuereinheit eines Gargeräts mit den Merkmalen des Anspruchs 1. Dieses erfindungsgemäße Verfahren ist vielfältig und flexibel in verschiedenen Situationen einsetzbar. Das Signal kann von der Steuereinheit, vom Temperaturfühler oder von beiden Komponenten ausgesendet und/oder empfangen werden. Genauso kann das Indikatorsignal beispielsweise von der Steuereinheit, dem Temperaturfühler oder von beiden Komponenten angezeigt werden.

Der Temperaturfühler ist vorzugsweise ein sogenannter kabelloser Temperaturfühler, der beispielsweise aus einem Messfühler und einem mit diesem über eine elektrische Leitung verbundenen Funkmodul mit einem Funkempfänger und einem Funksender besteht. Zwischen der Steuereinheit des Gargeräts und dem Funkmodul besteht keine kabelgebundene Verbindung, sondern lediglich eine Funkverbindung mit einer vorbestimmten Reichweite. Diese beträgt meist mehrere Meter.

Die Steuereinheit ist bevorzugt ein Bestandteil des Gargeräts und in dieses integriert oder über eine elektrische Leitung oder eine Funkverbindung mit diesem verbunden. Die Steuereinheit ist jedoch auf jeden Fall separat von den Funkmodulen der Temperaturfühler ausgebildet.

Die Temperaturfühler sind mit der Steuereinheit insbesondere durch eine gezielt zwischen der Steuereinheit und dem Temperaturfühler aufgebaute Funkverbindung verbunden, die vorzugsweise eine bidirektionale Kommunikation erlaubt, wobei eine eindeutige Zuordnung des Temperaturfühlers zum Gargerät sowie die Identität des Temperaturfühlers in der Steuereinheit abgelegt ist.

Gemäß einem ersten Aspekt der Erfindung sendet die Steuereinheit in vorbestimmten Zeitabständen ein Signal an den Temperaturfühler.

De Steuereinheit erwartet ein Antwortsignal des Temperaturfühlers auf das ausgesendete Signal, wobei abhängig von der an der Steuereinheit empfangenen Signalstärke ein Indikatorsignal ausgegeben wird. Das Indikatorsignal kann direkt an der Steuereinheit ausgegeben werden.

Liegt die Stärke des von der Steuereinheit empfangenen Signals des Temperaturfühlers unterhalb eines vorbestimmten Schwellenwerts, so wird das Indikatorsignal angezeigt, vorteilhaft zumindest direkt an der Steuereinheit. Dies gilt natürlich auch, wenn die Signalstärke Null wird, also die Steuereinheit gar kein Signal mehr empfängt. Aufgrund dieser Anzeige des Indikatorsignals wird das Bedienpersonal direkt darauf aufmerksam gemacht, dass ein Temperaturfühler beispielsweise aus dem Küchenbereich heraus bewegt wird.

In diesem Fall kann von der Steuereinheit ein weiteres Signal an den Temperaturfühler gesendet werden, um diesen zum Ausgeben des Indikatorsignals zu veranlassen, falls er dieses empfängt. Durch das Anzeigen des Indikatorsignals macht dann der Temperaturfühler auf sich aufmerksam und kann leicht wiedergefunden werden.

Um das Auffinden zu erleichtern oder sein Entwenden zu verhindern, kann der Temperaturfühler ein Indikatorsignal anzeigen, wenn er länger als eine vorbestimmte Zeitspanne kein oder nur ein schwaches Signal von der Steuereinheit empfangen hat. Dieser Zustand kann beispielsweise eintreten, wenn der Temperaturfühler aus dem Empfangsbereich der Funkverbindung heraus bewegt wurde, also zum Beispiel aus der Küche herausgetragen wurde.

Gemäß einem zweiten Aspekt der Erfindung sendet der Temperaturfühler in vorbestimmten Zeitabständen ein Signal an die Steuereinheit, und abhängig von der empfangenen Signalstärke zeigt die Steuereinheit ein Indikatorsignal an.

Dieses Verfahren hat den Vorteil, dass auf eine bidirektionale Kommunikation zwischen der Steuereinheit und dem Temperaturfühler verzichtet werden kann. Auch in diesem Fall wird sofort bemerkt, wenn sich der Temperaturfühler aus dem Empfangsbereich der Funkverbindung hinausbewegt.

Die Intensität des Indikatorsignals kann in umgekehrtem Verhältnis zur Empfangssignalstärke stehen, sodass beispielsweise mit zunehmender Entfernung und abnehmender Empfangssignalstärke das Indikatorsignal auffälliger wird. Dies kann z.B. durch eine Erhöhung einer Blinkfrequenz, einer Steigerung der Lautstärke eines akustischen Signals, der Verwendung von mehr Signalgebern und/oder einem Wechsel der Farben des Indikatorsignals erreicht werden.

Es ist auch möglich, dass an der Steuereinheit ein zweites, insbesondere zum ersten unterschiedliches Indikatorsignal angezeigt wird, wenn die Funkverbindung zum Temperaturfühler unterbrochen ist, also die Empfangssignalstärke Null wird. Auf diese Weise lässt sich schnell erkennen, wenn ein Temperaturfühler tatsächlich den Empfangsbereich der Funkverbindung verlassen hat.

Gemäß einer einfacheren Variante kann die Steuereinheit insbesondere nach Bedarf und auf eine Aktion eines Benutzers hin ein Signal an den Temperaturfühler senden, woraufhin der Temperaturfühler ein Indikatorsignal anzeigt. Dieses Signal wird vorzugsweise durch manuelle Einwirkung an der Steuereinheit gesendet, beispielsweise durch Auslösung einer Eingabevorrichtung durch einen Benutzer, und führt vorteilhaft zu einem einmaligen Aussenden eines Signals beziehungsweise dem Aussenden mehrerer Signale in einem kurzen vorgegebenen Zeitfenster. Durch das am und vom Temperaturfühler angezeigte Indikatorsignal kann dieser einfach lokalisiert werden.

Das Indikatorsignal ist so gewählt, dass es von einem Benutzer unmittelbar und ohne Hilfsmittel wahrnehmbar ist.

Das Indikatorsignal ist ein optisches und/oder ein akustisches Signal, beispielsweise ein Blinken, bevorzugt in verschiedenen Farben, oder das Aussenden eines oder mehrerer unterschiedlicher Tonsignale, von der Steuereinheit und/oder vom Temperaturfühler. Mehrere unterschiedliche Arten von Indikatorsignalen können dabei natürlich kombiniert werden.

Zur einfachen Unterscheidung der einzelnen Temperaturfühler kann jedem der Temperaturfühler ein unterschiedliches Indikatorsignal, z.B. eine unterschiedliche Farbe des Indikatorsignals zugeordnet werden. Eine derartige Zuordnung kann bei der Verbindung der Temperaturfühler mit der Steuereinheit durch die Steuereinheit erfolgen oder am jeweiligen Temperaturfühler selbst.

Mit diesen möglichen Ausprägungen des Verfahrens kann beispielsweise unmittelbar reagiert werden, wenn die Funkverbindung zu einem der mit der Steuereinheit logisch verbundenen Temperaturfühler abbricht.

Das erfindungsgemäße Verfahren kann in einem Gargerät mit den Merkmalen des Anspruchs 7 durchgeführt werden.

Die Steuereinheit ist so ausgebildet, dass sie ein Signal an den Temperaturfühler sendet und ein Antwortsignal vom Temperaturfühler empfängt und der Signalgeber der Steuereinheit und/oder des Temperaturfühlers in Abhängigkeit des Antwortsignals das Indikatorsignal ausgibt.

Alternativ oder zusätzlich ist der Temperaturfühler so ausgebildet, dass er ein Signal an die Steuereinheit sendet und der Signalgeber der Steuereinheit in Abhängigkeit der von der Steuereinheit empfangenen Signalstärke das Indikatorsignal ausgibt.

Zusätzlich kann die Steuereinheit eine Eingabevorrichtung aufweisen und so ausgebildet sein, dass sie bei Auslösen der Eingabevorrichtung ein Signal an den Temperaturfühler sendet. Der Temperaturfühler ist vorzugsweise so ausgebildet, dass er das Signal der Steuereinheit empfangen kann. Der Temperaturfühler weist den Signalgeber auf und gibt bei Empfang des Signals ein Indikatorsignal aus.

Es ist möglich, den oder die Signalgeber am Gargerät beziehungsweise der Steuereinheit des Gargeräts, am Messfühler des Temperaturfühlers, am Funkmodul des Temperaturfühlers und/oder an der elektrischen Leitung zwischen Messfühler und Funkmodul anzuordnen. Ein oder mehrere dieser Komponenten können jeweils einen oder mehrere Signalgeber aufweisen.

Als Signalgeber kommen beispielsweise Leuchtdioden in verschiedenen Farben, verschiedener Anzahl und verschiedenen Positionen am Temperaturfühler (Messfühler, Kabel und Funkmodul) sowie an der Steuereinheit, dort bevorzugt an einer Anzeige der Steuereinheit, infrage. Es können auch Lautsprecher vorgesehen sein, die dann vorzugsweise am Funkmodul des Temperaturfühlers und/oder an der Steuereinheit angeordnet sind. Optische und akustische Signalgeber können selbstverständlich auch kombiniert werden.

Bevorzugt können die Signalgeber jeweils verschiedene optische beziehungsweise akustische Indikatorsignale aussenden, also beispielsweise Lichtsignale verschiedener Farben und mit verschiedenen Blinkfrequenzen und unterschiedliche Tonsignale, die in der Lautstärke variiert werden können.

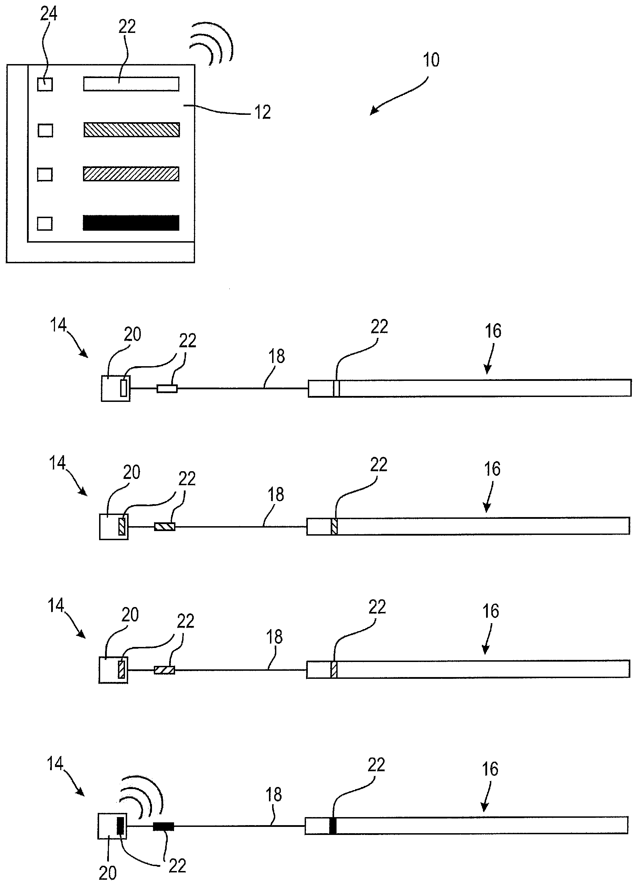

Die Erfindung wird nachfolgend anhand eines Ausführungsbeispiels mit Bezug auf die beigefügte Zeichnung näher beschrieben. Die einzige Figur zeigt eine schematische Darstellung eines erfindungsgemäßen Gargeräts zur Durchführung eines erfindungsgemäßen Verfahrens.

Das in der Figur gezeigte Gargerät 10 hat eine Steuereinheit 12 und einen nicht weiter dargestellten Garraum zur Zubereitung von Gargut.

Mehrere Temperaturfühler 14 sind per Funk mit der Steuereinheit 12 des Gargeräts 10 verbunden. Im hier dargestellten Beispiel werden vier Temperaturfühler 14 eingesetzt, die alle im Wesentlichen gleich aufgebaut sind. Jeder Temperaturfühler 14 besitzt einen eigentlichen Messfühler 16, der ein Metallgehäuse mit einem Fühlergriff aufweist (hier nur schematisch dargestellt) und der beispielsweise ein Kerntemperaturfühler ist, dessen freies Ende in das Gargut gesteckt wird. Der Messfühler 16 ist über eine elektrische Leitung 18 mit einem Funkmodul 20 im Fühlergriff verbunden, das einen Empfänger und einen Sender aufweist und so über Funk mit der Steuereinheit 12 vorzugsweise bidirektional kommunizieren kann. Auf diesem Weg empfängt die Steuereinheit 12 auch Temperatursignale des Messfühlers 16, die dann z.B. an einer Anzeige der Steuereinheit 12 dargestellt werden können.

Es sind Signalgeber 22 vorgesehen, die im hier gezeigten Beispiel am Funkmodul 20, an der elektrischen Leitung 18 und am Griff des Messfühlers 16 angeordnet sind. Außerdem weist auch die Anzeige der Steuereinheit 12 Anzeigeelemente für jeden der Temperaturfühler 14 als Signalgeber 22 auf. An jeder dieser Positionen ist hier jeweils nur ein Signalgeber 22 dargestellt, dies geschieht aber nur aus Gründen der Übersichtlichkeit. Es ist möglich, an jeder Position eine beliebige Anzahl von Signalgebern 22 anzubringen.

Bei der hier gezeigten Ausführungsform kann jedes der Signalgeber 22 optische und/oder akustische Indikatorsignale ausgeben. Die Signalgeber 22 enthalten beispielsweise eine Lichtquelle sowie einen Lautsprecher (wie für den untersten Temperaturfühler 14 in der Figur dargestellt). Natürlich kann in der Steuereinheit 12 ein einzelner Lautsprecher als Signalgeber vorgesehen sein. Die einzelnen Temperaturfühler 14 haben in diesem Beispiel alle ein individuelles Indikatorsignal, sodass ein spezifischer Temperaturfühler leicht identifiziert werden kann. Die individuellen Indikatorsignale sind z.B. verschiedene Farben, in der Figur durch die unterschiedlichen Füllmuster dargestellt.

Als Lichtquelle sind vorzugsweise in jedem Signalgeber 22 ein oder mehrere LEDs angeordnet. In einer Variante ist die Lichtquelle durch einen Lichtwellenleiter ersetzt, der mit einer vom eigentlichen Signalgeber 22 entfernt angeordneten Lichtquelle verbunden ist, beispielsweise mit einer LED in der Steuereinheit 12.

Die Steuereinheit 12 weist außerdem noch Eingabevorrichtungen 24 auf, die in diesem Beispiel jeweils einem der Temperaturfühler 14 zugeordnet sind.

Um die Anwesenheit beziehungsweise Abwesenheit eines der Temperaturfühler 14 im Bereich der Funkverbindung zwischen dem Temperaturfühler 14 und der Steuereinheit 12 zu überwachen oder zu überprüfen, sendet in einer ersten Ausführungsform die Steuereinheit 12 in regelmäßigen Abständen, z.B. alle 1 bis 10 Sekunden, ein Funksignal aus, das vom jeweiligen Temperaturfühler 14 erkannt wird. Diese Signale gehen an alle der mit der Steuereinheit 12 verbundenen Temperaturfühler 14, sind aber für die einzelnen Temperaturfühler 14 individualisiert.

Der jeweilige Temperaturfühler 14 generiert auf Empfang des Signals von der Steuereinheit 12 hin ein Antwortsignal und sendet dies von seinem Funkmodul 20 zurück. Dieses Antwortsignal wird in der Steuereinheit 12 mit einer bestimmten Signalstärke empfangen. Kommt kein Antwortsignal an, so empfängt die Steuereinheit für diesen spezifischen Temperaturfühler 14 die Signalstärke Null.

Unterschreitet die Signalstärke des empfangenen Antwortsignals einen vorbestimmten Schwellenwert, so zeigt der Signalgeber 22 auf der Anzeige der Steuereinheit 12 das Indikatorsignal an, hier eine vorbestimmte Farbe. Dies ist ein Signal für den Benutzer, dass der Temperaturfühler 14 beginnt, die Reichweite der Funkverbindung zu verlassen, sich also weiter als vorgesehen von der Steuereinheit 12 entfernt.

Außerdem sendet die Steuereinheit 12 ein Signal an den Temperaturfühler 14, von dem sie das Antwortsignal mit der schwachen Signalstärke empfangen hat, das diesen veranlasst, ein Indikatorsignal auszugeben. Das Indikatorsignal ist so gewählt, dass es gut geeignet ist, einen Benutzer auf den Temperaturfühler aufmerksam zu machen und ist z.B. ein Blinken aller Signalgeber 22 am Temperaturfühler 14 in einer dem Temperaturfühler 14 zugeordneten Farbe oder ein von diesen abgegebenes lautes akustisches Signal.

Empfängt die Steuereinheit 12 überhaupt kein Antwortsignal, so wird ein (hier nicht dargestelltes) zweites Indikatorsignal, beispielsweise in Form eines Blinksignals angezeigt, das den Benutzer darauf aufmerksam macht, dass die Funkverbindung abgerissen ist und der Temperaturfühler 14 möglicherweise aus der Küche entfernt wurde. Alternativ oder zusätzlich wird in diesem Beispiel von der Steuereinheit 12 ein akustisches Signal ausgegeben, z.B. ein Pfeifton.

In einer Variante dieser Ausführungsform sind die Funkmodule 20 der jeweiligen Temperaturfühler 14 so programmiert, dass sie in regelmäßigen Abständen ein Signal der Steuereinheit 12 erwarten. Empfängt jedoch ein Temperaturfühler 14 über einen vorbestimmten Zeitraum kein Signal der Steuereinheit 12, so zeigt er auf seinen Signalgebern 22 ein oder mehrere Indikatorsignale an. In diesem Fall ist bevorzugt neben einem optischen Signal, beispielsweise einem Blinken, auch die Ausgabe eines akustischen Signals durch den im Funkmodul eingebauten Lautsprecher von Vorteil, um den Temperaturfühler 14 schnell wieder finden zu können.

Die Intensität des Indikatorsignals ist an die Signalstärke des in der Steuereinheit 12 bzw. dem Temperaturfühler 14 empfangenen Signals gekoppelt. Je geringer die Signalstärke ist, desto intensiver wird das Indikatorsignal angezeigt. Eine erhöhte Intensität kann beispielsweise in einer Farbänderung, einem schneller werdenden Blinken, einer Verwendung von mehr Signalgebern, der Zuschaltung eines akustischen Indikatorsignals, der Erhöhung der Lautstärke des akustischen Indikatorsignals und/oder der Änderung des akustischen Indikatorsignals bestehen.

Die Kombination aus Temperaturfühlern 14 und Gargerät 10 kann auch in einem anderen Verfahren gemäß einer zweiten Ausführungsform betrieben werden, wobei das Funkmodul 20 jedes der Temperaturfühler 14 in regelmäßigen Abständen ein Signal an die Steuereinheit 12 sendet, das dort detektiert wird. Wie bei dem gerade beschriebenen Verfahren reagiert die Steuereinheit 12, wenn die Signalstärke des Empfangssignals unter einen bestimmten Schwellenwert fällt, und zeigt dann das Indikatorsignal auf den Signalgebern 22 an.

Erst in diesem Fall sendet die Steuereinheit 12 optional ein Signal an den jeweiligen Temperaturfühler 14, woraufhin dieser an seinen Signalgebern 22 entsprechende Indikatorsignale anzeigt, falls er das Signal empfängt.

Es ist auch möglich, quasi in Umkehr des Verfahrens der ersten Ausführungsform, dass die Steuereinheit 12 in Antwort auf das von den Temperaturfühlern 14 empfangene Signal ein Antwortsignal an die Temperaturfühler 14 zurücksendet. Wird dieses Antwortsignal nicht innerhalb einer vorbestimmten Zeitspanne vom Temperaturfühler 14 oder nur mit einer Signalstärke unterhalb eines vorgegebenen Schwellenwerts empfangen, so gibt der jeweilige Temperaturfühler 14 selbstständig an seinen Signalgebern 22 das oder die Indikatorsignale aus.

Anstelle oder zusätzlich zu der ständigen Kommunikation der Temperaturfühler 14 mit der Steuereinheit 12 ist eine einmalige Ruffunktion für den Temperaturfühler 14 vorgesehen. Um diese auszulösen betätigt der Benutzer die jeweilige Eingabevorrichtung 24 an der Steuereinheit 12 für den gewünschten Temperaturfühler 14, woraufhin die Steuereinheit 12 ein gezieltes Abfragesignal an diesen ausgewählten Temperaturfühler 14 sendet. Empfängt der Temperaturfühler 14 das Abfragesignal, so reagiert er mit der Anzeige eines Indikatorsignals mit seinen Signalgebern 22, wobei auch hier ein besonders intensives Indikatorsignal (beispielsweise schnelles Blinken oder lauter Ton) von Vorteil ist.

Alle beschriebenen Merkmale, insbesondere Anordnung und Ausbildung sowie Ansteuerung der Signalgeber 22 und die Auswahl der Indikatorsignale lassen sich vom Fachmann frei miteinander kombinieren, gegeneinander austauschen oder auf beliebige Weise erweitern.

## Patentansprüche

1. Verfahren zum Überwachen eines mit einer Steuereinheit (12) eines Gargeräts (10) über eine Funkverbindung verbundenen Temperaturfühlers (14) zum Überprüfen der Anwesenheit des Temperaturfühlers (14), **dadurch gekennzeichnet, dass** die folgenden Schritte durchgeführt werden:
Überprüfen der Anwesenheit des Temperaturfühlers (14) durch Aussenden eines Signals und Ausgeben eines optischen und/oder akustischen Indikatorsignals abhängig vom Empfang des Signals,
indem die Steuereinheit (12) in vorbestimmten Zeitabständen ein Signal an den Temperaturfühler (14) sendet und die Steuereinheit (12) ein Antwortsignal des Temperaturfühlers (14) erwartet und abhängig von der an der Steuereinheit (12) empfangenen Signalstärke das optische und/oder akustische Indikatorsignal ausgegeben wird, wenn die Stärke des von der Steuereinheit (12) empfangenen Signals einen vorgegebenen Schwellenwert unterschreitet, oder
indem der Temperaturfühler (14) in vorbestimmten Zeitabständen ein Signal an die Steuereinheit (12) sendet und abhängig von der empfangenen Signalstärke die Steuereinheit (12) das optische und/oder akustische Indikatorsignal ausgibt.

2. Verfahren nach Anspruch 1, **gekennzeichnet durch** den Schritt, dass der Temperaturfühler (14) ein Indikatorsignal anzeigt, wenn er länger als eine vorbestimmte Zeitspanne kein Signal von der Steuereinheit (12) empfangen hat.

3. Verfahren nach einem der vorhergehenden Ansprüche, **dadurch gekennzeichnet, dass** die Intensität des ausgegebenen Indikatorsignals im umgekehrten Verhältnis zur Empfangssignalstärke steht.

4. Verfahren nach einem der vorhergehenden Ansprüche, **dadurch gekennzeichnet, dass** ein zweites, insbesondere unterschiedliches Indikatorsignal an der Steuereinheit (12) angezeigt wird, wenn die Funkverbindung zum Temperaturfühler (14) unterbrochen ist.

5. Verfahren nach einem der vorhergehenden Ansprüche, **gekennzeichnet durch** die Schritte, dass die Steuereinheit (12) ein Signal an den Temperaturfühler (14) sendet und daraufhin der Temperaturfühler (14) das Indikatorsignal ausgibt.

6. Verfahren nach einem der vorhergehenden Ansprüche, **dadurch gekennzeichnet, dass** für verschiedene Temperaturfühler (14) unterschiedliche Indikatorsignale verwendet werden.

7. Gargerät zur Durchführung des Verfahrens nach einem der vorhergehenden Ansprüche, mit einer Steuereinheit (12) und wenigstens einem Temperaturfühler (14), der mit der Steuereinheit (12) mittels einer Funkverbindung in Verbindung steht, **dadurch gekennzeichnet, dass** die Steuereinheit (12) und/oder der Temperaturfühler (14) wenigstens einen ein Indikatorsignal abgebenden Signalgeber (22) und jeweils einen Sender und/oder einen Empfänger zum Aussenden bzw. Empfangen von Signalen aufweisen und so ausgebildet sind, dass abhängig vom Empfang des Signals in der Steuereinheit (12) und/oder im Temperaturfühler (14) der Signalgeber (22) ein optisches und/oder akustisches Indikatorsignal ausgeben kann, wobei die Steuereinheit (12) so ausgebildet ist, dass sie in vorbestimmten Zeitabständen ein Signal an den Temperaturfühler (14) sendet und ein Antwortsignal vom Temperaturfühler (14) empfängt und der Signalgeber (22) der Steuereinheit (12) und/oder des Temperaturfühlers (14) in Abhängigkeit von der an der Steuereinheit (12) empfangenen Signalstärke des Antwortsignals das Indikatorsignal ausgibt, wenn die Stärke des von der Steuereinheit (12) empfangenen Signals einen vorgegebenen Schwellenwert unterschreitet, und der Temperaturfühler (14) so ausgebildet ist, dass er ein Signal an die Steuereinheit (12) sendet, und der Signalgeber (22) der Steuereinheit (12) und/oder des Temperaturfühlers (14) in Abhängigkeit der von der Steuereinheit (12) empfangenen Signalstärke das Indikatorsignal ausgibt.

8. Gargerät nach Anspruch 7, **dadurch gekennzeichnet, dass** die Steuereinheit (12) eine Eingabevorrichtung (24) aufweist und so ausgebildet ist, dass sie bei Betätigung der Eingabevorrichtung (24) ein Signal an den Temperaturfühler (14) sendet, und der Temperaturfühler (14) so ausgebildet ist, dass er das Signal der Steuereinheit (12) empfangen kann sowie den Signalgeber (22) aufweist und bei Empfang des Signals das Indikatorsignal ausgibt.

## Claims

1. A method of monitoring a temperature sensor (14) connected to a control unit (12) of a cooking device (10) via a radio link for checking the presence of the temperature sensor (14), **characterized in that** the following steps are carried out:
checking the presence of the temperature sensor (14) by emitting a signal and outputting a visual and/or acoustic indicator signal depending on the reception of the signal
by the control unit (12) sending a signal to the temperature sensor (14) at predetermined time intervals, and the control unit (12) expecting a response signal from the temperature sensor (14), and, depending on the signal strength received at the control unit (12), the visual and/or acoustic indicator signal is output if the strength of the signal received by the control unit (12) falls below a predefined threshold value, or
by the temperature sensor (14) sending a signal to the control unit (12) at predetermined time intervals and the control unit (12) outputting the visual and/or acoustic indicator signal depending on the signal strength received.

2. The method according to claim 1, **characterized by** the step in which the temperature sensor (14) displays an indicator signal when it has not received a signal from the control unit (12) for longer than a predetermined period of time.

3. The method according to either of the preceding claims, **characterized in that** the intensity of the output indicator signal is inversely proportional to the received signal strength.

4. The method according to any of the preceding claims, **characterized in that** a second, more particularly different, indicator signal is displayed on the control unit (12) when the radio link to the temperature sensor (14) has been interrupted.

5. The method according to any of the preceding claims, **characterized by** the steps in which the control unit (12) sends a signal to the temperature sensor (14) and thereupon the temperature sensor (14) outputs the indicator signal.

6. The method according to any of the preceding claims, **characterized in that** various different indicator signals are used for different temperature sensors (14).

7. A cooking device for carrying out the method according to any of the preceding claims, comprising a control unit (12) and at least one temperature sensor (14) which is in communication with the control unit (12) by means of a radio link, **characterized in that** the control unit (12) and/or the temperature sensor (14) include(s) at least one signal generator (22) emitting an indicator signal and each includes a transmitter and/or a receiver for sending and receiving signals, respectively, and are configured such that, depending on the reception of the signal in the control unit (12) and/or in the temperature sensor (14), the signal generator (22) can output a visual and/or acoustic indicator signal, the control unit (12) being configured such that it sends a signal to the temperature sensor (14) at predetermined time intervals and receives a response signal from the temperature sensor (14), and the signal generator (22) of the control unit (12) and/or of the temperature sensor (14) outputting the indicator signal as a function of the signal strength of the response signal received at the control unit (12) if the strength of the signal received by the control unit (12) falls below a predefined threshold value, and the temperature sensor (14) being configured such that it sends a signal to the control unit (12), and the signal generator (22) of the control unit (12) and/or of the temperature sensor (14) outputting the indicator signal as a function of the signal strength received by the control unit (12).

8. The cooking device according to claim 7, **characterized in that** the control unit (12) includes an input device (24) and is configured such that it sends a signal to the temperature sensor (14) when the input device (24) is operated, and the temperature sensor (14) is configured such that it can receive the signal of the control unit (12) and includes the signal generator (22) and outputs the indicator signal upon receiving the signal.

## Revendications

1. Procédé de surveillance d'un capteur de température (14) relié à une unité de commande (12) d'un appareil de cuisson (10) par une liaison radio pour vérifier la présence du capteur de température (14), **caractérisé en ce que** les étapes suivantes sont réalisées :
vérification de la présence du capteur de température (14) en envoyant un signal et en sortant un signal indicateur optique et/ou acoustique en fonction de la réception du signal,
**en ce que** l'unité de commande (12) envoie un signal au capteur de température (14) à intervalles de temps prédéterminés et l'unité de commande (12) attend un signal de réponse du capteur de température (14), et **en ce que** le signal indicateur optique et/ou acoustique est sorti en fonction de l'intensité de signal reçue au niveau de l'unité de commande (12), lorsque l'intensité du signal reçu par l'unité de commande (12) est inférieure à une valeur seuil prédéfinie, ou
**en ce que** le capteur de température (14) envoie un signal à l'unité de commande (12) à intervalles de temps prédéterminés et l'unité de commande (12) sort le signal indicateur optique et/ou acoustique en fonction de l'intensité de signal reçue.

2. Procédé selon la revendication 1, **caractérisé par** l'étape dans laquelle le capteur de température (14) affiche un signal indicateur s'il n'a pas reçu de signal de l'unité de commande (12) au-delà d'une période de temps prédéterminée.

3. Procédé selon l'une des revendications précédentes, **caractérisé en ce que** l'intensité du signal indicateur sorti est inversement proportionnelle à l'intensité de signal de réception.

4. Procédé selon l'une des revendications précédentes, **caractérisé en ce qu'**un deuxième, en particulier un signal indicateur différent est affiché au niveau de l'unité de commande (12) lorsque la liaison radio avec le capteur de température (14) est interrompue.

5. Procédé selon l'une des revendications précédentes, **caractérisé par** les étapes dans lesquelles l'unité de commande (12) envoie un signal au capteur de température (14) et le capteur de température (14) sort dans la suite le signal indicateur.

6. Procédé selon l'une des revendications précédentes, **caractérisé en ce que** différents signaux indicateurs sont utilisés pour différents capteurs de température (14).

7. Appareil de cuisson pour la réalisation du procédé selon l'une des revendications précédentes, comprenant une unité de commande (12) et au moins un capteur de température (14) qui est en communication avec l'unité de commande (12) par une liaison radio, **caractérisé en ce que** l'unité de commande (12) et/ou le capteur de température (14) comporte(nt) au moins un générateur de signal (22) émettant un signal indicateur et comportent chacun un émetteur et/ou un récepteur pour l'envoi et la réception, respectivement, de signaux, et **en ce qu'**ils sont réalisés de telle sorte que le générateur de signal (22) peut sortir un signal indicateur optique et/ou acoustique en fonction de la réception du signal dans l'unité de commande (12) et/ou dans le capteur de température (14), l'unité de commande (12) étant réalisée de telle sorte qu'elle envoie un signal au capteur de température (14) à intervalles de temps prédéterminés et reçoit un signal de réponse du capteur de température (14) et que le générateur de signal (22) de l'unité de commande (12) et/ou du capteur de température (14) sort le signal indicateur en fonction de l'intensité de signal du signal de réponse reçue au niveau de l'unité de commande (12), lorsque l'intensité du signal reçu par l'unité de commande (12) est inférieure à une valeur seuil prédéfinie, et le capteur de température (14) étant réalisé de telle sorte qu'il envoie un signal à l'unité de commande (12) et que le générateur de signal (22) de l'unité de commande (12) et/ou du capteur de température (14) sort le signal indicateur en fonction de l'intensité de signal reçue par l'unité de commande (12).

8. Appareil de cuisson selon la revendication 7, **caractérisé en ce que** l'unité de commande (12) présente un dispositif d'entrée (24) et est réalisée de manière à envoyer un signal au capteur de température (14) lors de l'actionnement du dispositif d'entrée (24), et **en ce que** le capteur de température (14) est réalisé de manière à être apte à recevoir le signal de l'unité de commande (12) et présente le générateur de signal (22) et sort le signal indicateur lors de la réception du signal.
